# EUROPEAN PATENT SPECIFICATION

(11) **EP 2 438 736 B1**
(45) Date of publication and mention of the grant of the patent: **10.10.2012**
(21) Application number: 10727567.9
(22) Date of filing: 01.06.2010
(51) Int. Cl.: H04L 29/06

(54) **WORKGROUP KEY WRAPPING FOR COMMUNITY OF INTEREST MEMBERSHIP AUTHENTICATION**
VERWALTUNG EINES ARBEITSGRUPPENSCHLÜSSELS ZUR AUTHENTIFIZIERUNG IN EINER NUTZERGRUPPE MIT GLEICHEN INTERESSEN
CONDITIONNEMENT DE CLÉS DE GROUPE DE TRAVAIL POUR UNE AUTHENTIFICATION D'APPARTENANCE À UNE COMMUNAUTÉ D'INTÉRÊT

(30) Priority: 02.06.2009 US 476437
(43) Date of publication of application: 11.04.2012
(73) Proprietor: Unisys Corporation, Blue Bell, PA 19422 (US)
(72) Inventor: JOHNSON, Robert, Pottstown PA 19464 (US); CHIN, Edward, Newtown Square PA 19073 (US); DODGSON, David, Lansdale PA 19446 (US)
(74) Representative: Harrison Goddard Foote
(86) International application number: PCT/US2010/036869
(87) International publication number: WO 2010/141445

(56) References cited:
- EP-A2- 1 326 156
- US-A- 5 953 419
- US-A1- 2006 191 020

## Description

### Technical Field

The present disclosure relates to management of encryption keys useable to protect data in data networks. More specifically, the present disclosure relates to workgroup key wrapping for community of interest membership authentication.

### Background

Communities of interest refer to groups of individuals that have a common set of interests. In the context of a computing architecture such as a data storage network, a community of interest can correspond to a group of individuals having an interest in accessing a particular storage area, set of data, or computing resource. The particular communities of interest may be determined based on job function or security clearance level, and the individuals in each group will typically change over time due to changes in job function, security, or other factors.

In certain circumstances, it may be desirable to maintain communities of interest separate from one another. This can be the case, for example, when one group of individuals requires restricted access to sensitive data (e.g. due to security clearance or due to the nature of business function such as human resources, accounting, etc.), Other groups of individuals may require access to some of the same data, or may be restricted from certain data altogether. US 5,953, 419 A describes a method of securing stored digital data from unauthorized use.

Assignment of specific members to a community of interest is typically accomplished through use of an access control list (ACL). An ACL lists all of the authorized users who are permitted to access a particular network, server, application, data store, or other resource, and assigns permissions to those users and resources. These ACLs are difficult to manage, and incur a high cost in administrative labor to update and securely maintain, because of the administrative overhead required to list users and associated assets (e.g. data, storage resources, or computing resources) that those users can access.

### Summary

In a first aspect, a method of managing a community of interest having access to a resource comprises creating a workgroup key associated with a community of interest, and protecting one or more resources associated with the community of interest using the workgroup key. The method also includes encrypting the workgroup key using a public key associated with an administrator of the community of interest, the public key included with a private key in a public/private key pair associated with the administrator. The method further includes storing the encrypted workgroup key, and associating the workgroup key with a user, thereby adding the user to the community of interest.

In a second aspect, a method of rekeying a community of interest including a plurality of users, each of the users having access to a workgroup key used to protect a resource, is disclosed. The method includes disassociating a workgroup key from each of the plurality of users having access to the workgroup key, and creating a replacement workgroup key associated with the community of interest, the replacement workgroup key protecting the resource protected by the workgroup key. The method also includes encrypting the replacement workgroup key using a key associated with an administrator of the community of interest, and storing the encrypted replacement workgroup key. The method further includes associating the replacement workgroup key with each of the plurality of users, thereby including each of the plurality of users in the community of interest.

In a third aspect, a system for managing membership in a community of interest includes a key server including a memory and a programmable circuit. The key server is accessible to a plurality of users and manages access to a plurality of resources. The memory is configured to store a directory including a plurality of user profiles, each user profile associated with a user. The programmable circuit is communicatively connected to the memory and configured to execute program instructions to create a workgroup key associated with a community of interest and protect one or more of the plurality of resources associated with the community of interest using the workgroup key. The programmable circuit is further configured to encrypt the workgroup key using a public key associated with an administrator of the community of interest, the public key included with a private key in a public/private key pair associated with the administrator. The programmable circuit is also configured to store the encrypted workgroup key in a user profile of the administrator, the user profile of the administrator included in the directory, and associate the workgroup key with one or more users from among the plurality of users, thereby adding each of the one or more users to the community of interest.

### Brief Description of the Drawings

Figure 1 is a schematic view of a network in which aspects of the present disclosure can be implemented;
Figure 2 is a schematic view of a secured network implementing communities of interest;
Figure 3 is a schematic illustration of a system in which secure access of a requested resource is accomplished using wrapped workgroup keys;
Figure 4 is a schematic block diagram of aspects of a key server used to manage wrapped workgroup keys;
Figure 5 is an example flowchart of methods and systems for managing a community of interest having access to a resource;
Figure 6 is an example flowchart of methods and systems for associating a user with a workgroup key associated with a community of interest;
Figure 7 is an example flowchart of methods and systems for accessing a resource as a member of a community of interest;
Figure 8 is an example flowchart of methods and systems for rekeying a community of interest with a replacement workgroup key; and
Figure 9 is a block diagram illustrating example physical components of an electronic computing device.

### Detailed Description

Various embodiments of the present invention will be described in detail with reference to the drawings, wherein like reference numerals represent like parts and assemblies throughout the several views. Reference to various embodiments does not limit the scope of the invention, which is limited only by the scope of the claims attached hereto. Additionally, any examples set forth in this specification are not intended to be limiting and merely set forth some of the many possible embodiments for the claimed invention.

The logical operations of the various embodiments of the disclosure described herein are implemented as: (1) a sequence of computer implemented steps, operations, or procedures running on a programmable circuit within a computer, and/or (2) a sequence of computer implemented steps, operations, or procedures running on a programmable circuit within a directory system, database, or compiler.

In general the present disclosure relates to use of workgroup keys to define communities of interest and protect computing resources, and a methodology for wrapping of workgroup keys using secondary encryption keys to manage access to the workgroup keys. The methods and systems of this disclosure use key management techniques to control membership in communities of interest and thereby allow user access to data, network ports, or other computing resources.

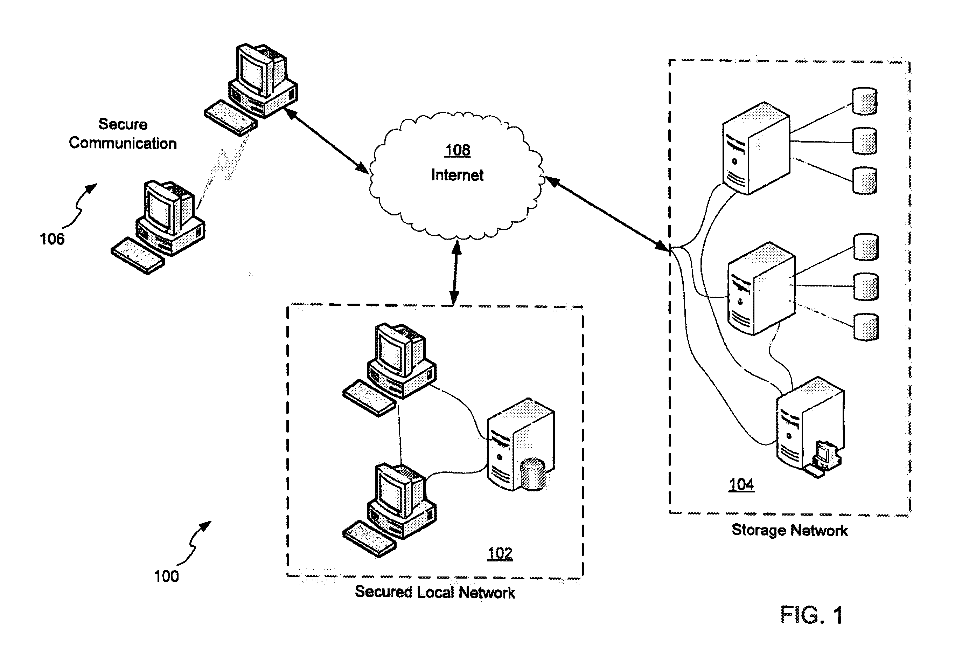

Figure 1 is a schematic view of a network 100 in which aspects of the present disclosure can be implemented. The network 100 represents a number of different example scenarios in which secured access to a computing resource is desired, and in which communities of interest can be implemented. In the embodiment shown, the network 100 includes a number of example subnetworks in which secured communication using communities of interest can take place. The network 100 includes a secured local area network 102, a storage network 104, and a secure communication connection 106.

The local area network 102 corresponds to a secured local area network in which data, applications, computing resources, or other computing capabilities can be shared among a number of computers and a number of users. For example, the local area network 102 can be a network within a corporation or otherwise controlled by a single entity, such that access to the network is limited but data access within the network is widely distributed. In such situations, one or more users may require access to certain data, and other users are restricted from access to that data. Or, certain users can have access to computing resources or portions of the network (or a level of access) that other users within the local area network do not have. Other distributions of users in communities of interest within the local area network 102 are possible as well.

In certain embodiments, each of the users in the local area network 102 can communicate using a secure communications arrangement such as those using cryptographic splitting of data across messages transmitted between computers within the network. Example secure communications systems are described in U.S. Patent Applications Nos. 11/714,590, entitled "Securing and Partitioning Data-in-Motion Uising a Community-of-Interest Key," to Johnson, filed March 6, 2007 (Attorney Docket No. TN400.USCIP1), 11/714,666, entitled "Communicating Split Portions Of A Data Set Across Multiple Data Paths," to Johnson et al., filed March 6, 2007 (Attorney Docket No. TN400.USCIP2), and 11/714,590, entitled "Gateway For Securing Data To/From A Private Network," to Johnson, filed March 6, 2007 (Attorney Docket No. TN400.USCIP3), all of which are Continuation-in-Parts of U.S. Patent Application Serial No. 11/339,974, entitled "Integrated Multi-Level Security System', to Johnson, filed January 26, 2006 (Attorney Docket No. TN400).

The storage network 104 includes a number of data storage devices (e.g. databases or data storage devices) configured to store data accessible to a number of users. In the context of the storage network, different users can be allowed access to different sets of data, or different views of a given set of data. Alternately, different users can be allowed different access levels to the data. In certain embodiments, the storage network 104 can be secured using communities of interest to control access to virtual volumes that are further secured using cryptographic splitting to store data across volumes, improving security and data availability. Example cryptographic splitting architectures are described in U.S. Patent Application No. 12/342,636 (Unisys Control No. TN498); U.S. Patent Application No. 12/342,575 (Unisys Control No. TN498A); and U.S. Patent Application No. 12/343,610 (Unisys Control No. TN498B), each filed on December 23, 2008 and entitled "Storage Communities Of Interest Using Cryptographic Splitting" . Further example cryptographic splitting architectures are described in U.S. Patent Application No. 12/336,559 (Unisys Control No. TN496); U.S. Patent Application No. 12/336,562 (Unisys Control No. TN496A); and U.S. Patent Application No. 12/336,564 (Unisys Control No. TN496B), each filed on December 17, 2008 and entitled "Storage Security Using Cryptographic Splitting" .

The secure communication connection 106 includes a direct secure communication connection between two or more computing systems. In such an arrangement, a user of one of the computing systems may be provided dedicated and/or secure access to a port or some other portion of the complementary computing system. That access right can be provided to that user (and other users having access to that computer) based on the user's identity and access to a workgroup key used to protect communicative access to the remote computer, in an analogous manner to that described in the local area network 102, above.

In the embodiment shown, the secured local area network 102, storage network 104, and secure communication connection 106 are interconnected via an unsecured connection, illustrated as the Internet 108. Although any of a variety of networks can be used, it is intended that the Internet 108 represent unsecured communication channels between computing systems, such that data or other resources must be individually secured prior to transmission on such a network. Such security over an open network such as Internet 108 can be accomplished using a community of interest access control of resources between trusted computers as well.

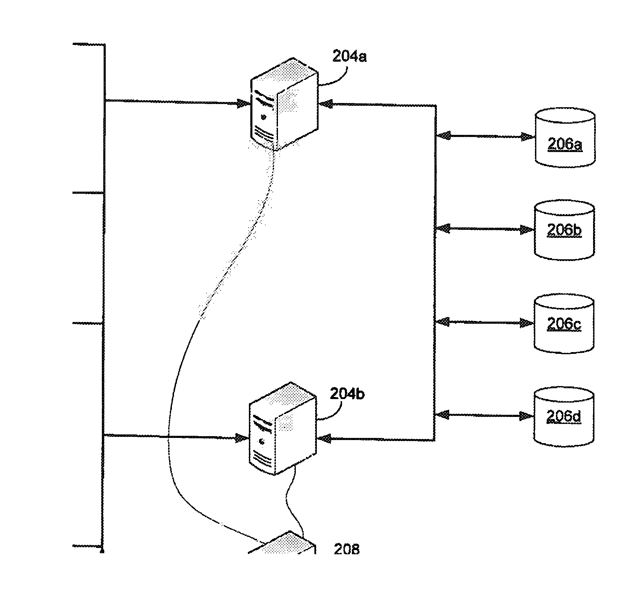

Figure 2 is a schematic view of a secured network 200 implementing communities of interest. The secured network 200 can represent any of a number of networks having accessible computing resources, such as the network 100 of Figure 1 or any of the subnetworks described therein. The secured network 200 illustrates an example network in which access to computing resources is controlled using communities of interest, as implemented using protected workgroup keys.

The secured network 200 includes a plurality of communities of interest 202a-n, each of which corresponds to one or more users having common interests in and access to computing resources within the network. Each of the communities of interest 202a-n can include one or more users and/or computing systems accessible to users having a common interest in a computing resource, such as data storage, communication ports, or other computing resources.

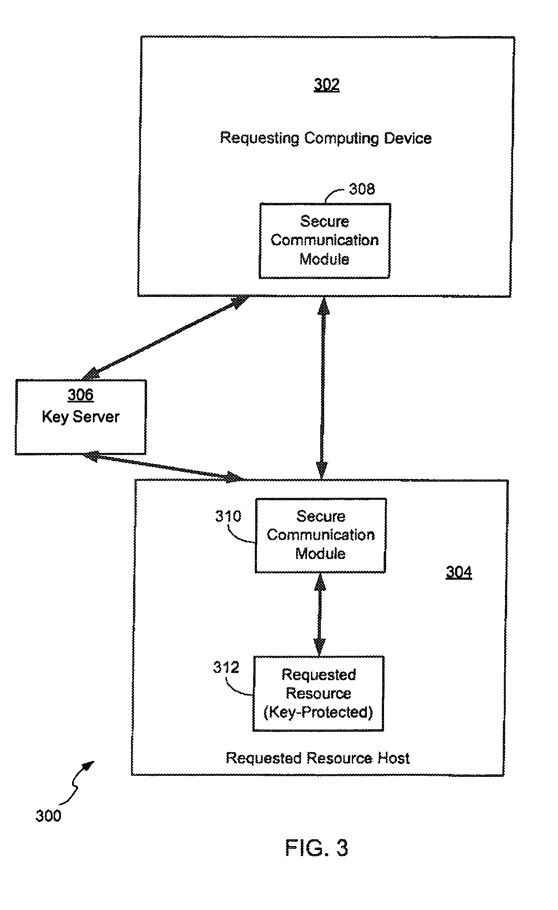

A number of computing resources are available to the communities of interest 202a-n in the example secured network 200, including computing systems 204a-b, and data storage 206a-d. A key server 208 manages access to the computing resources by managing users in one or more communities of interest. In general, the key server 208 maintains a directory of users, and can provide to each user one or more workgroup keys (designated "WK[number]" in the examples below, or generally as "WK" for convenience). Each workgroup key WK1 through WKN is associated with a particular community of interest, with access to the workgroup key defining whether or not a user is a member of the community of interest. For example, a first community of interest can be associated with a number of resources protected by workgroup key WK1, while a second community of interest (which may include the same or different users as members) can be associated with a different set of resources protected by a different workgroup key, e.g., WK2. The key server 208 securely stores copies of workgroup keys specific to different communities of interest by "wrapping" each workgroup key, or encrypting the key with a key specific to that user. Example configurations providing additional details of a user accessing a protected resource as a member of a community of interest are shown in further detail in Figures 3-4.

Figure 3 is a schematic illustration of a system 300 in which secure access of a requested resource is accomplished using wrapped workgroup keys. In the embodiment shown, a requesting computing device 302 is connected to a requested resource host 304 and a key server 306. The requesting computing device 302 is a computing device operated or accessed by a user who is a member of a community of interest. The requesting computing device 302 includes a secure communication module 308, which manages secure communication with hosts of protected resources, and which can temporarily store a workgroup key required to access the resource.

In certain embodiments, the requesting computing device 302 includes a personal identification storage, which manages and stores user authentication information alongside other user local profile information, including private keys of public/private key pairs, smart card certificate information, or other information used to manage and coordinate user authentication in connection with the key server 306. The personal identification storage can be updated upon a user logging on to the requesting computing device, or upon the device connecting to or requesting access to a computing resource, such as provided by the requested resource host 304.

The requested resource host 304 includes a secure communication module 310 which receives and arbitrates requests received from the secure communication module 310 for access to a resource 312. The resource 312 can be any computing resource managed by or hosted on the host 304, such as a database or other data storage, a communications port, processing resources, communications bandwidth, or other resources. The resource 312 is protected from unauthorized access by a workgroup key. This can be accomplished in a number of ways. For example, if the resource is data or a volume of data, the data can be encrypted using the workgroup key, or a second key that encrypts the data can in turn be encrypted by a workgroup key. Alternatively, the workgroup key can be used to encrypt access information managed in the secure communication module 310, which acts as a gatekeeper for access to the resource 312. Other possible protection schemes can be implemented as well, depending upon the resource to be protected.

The key server 306 connects to the requesting computing device 302 and the requested resource host 304. The key server 306 provides administrative access to the system 300 and administrator management of workgroup keys. In use, the key server 306, as directed by an administrator of the system 300, establishes a workgroup key that is used to protect the resource 312. The key server 306 communicates the generated workgroup key to the requested resource host 304, which applies a protection scheme as previously described to prevent unauthorized resource access by users that do not have access to the workgroup key.

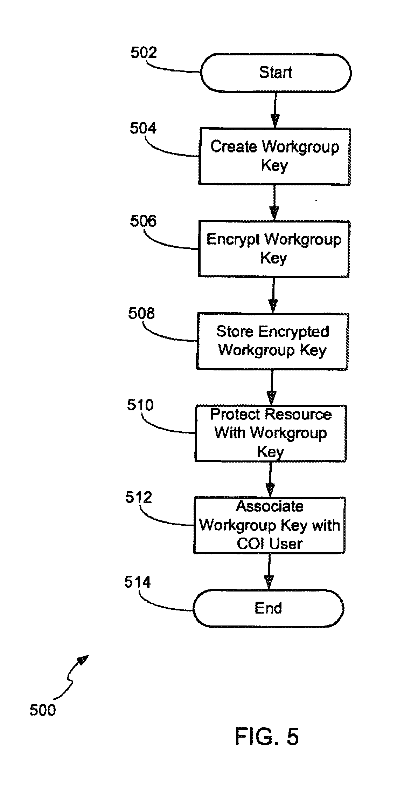

To access the resource, a user (and therefore the requesting computing device 302) must have access to that workgroup key. The key server 306 hosts a directory of users and administrators, and workgroup keys associated with each user or administrator. To add a user to a community of interest, the workgroup key is associated with that user in the directory, for example by using the techniques described below in Figures 5-6.

In general, while the generated workgroup key is stored on any of the requesting computing device 302, the requested resource host 304, or the key server 306, that workgroup key is preferably not visible in clear text to the system on which it is stored. Preferably, the workgroup key is encrypted, or "wrapped" using another encryption key. In certain embodiments described herein, the workgroup key is initially wrapped with an administrator-specific encryption key, such that the administrator can restrict access to the workgroup key. An administrator can then access the key and manage access to the community of interest using the techniques described below in Figures 5-8.

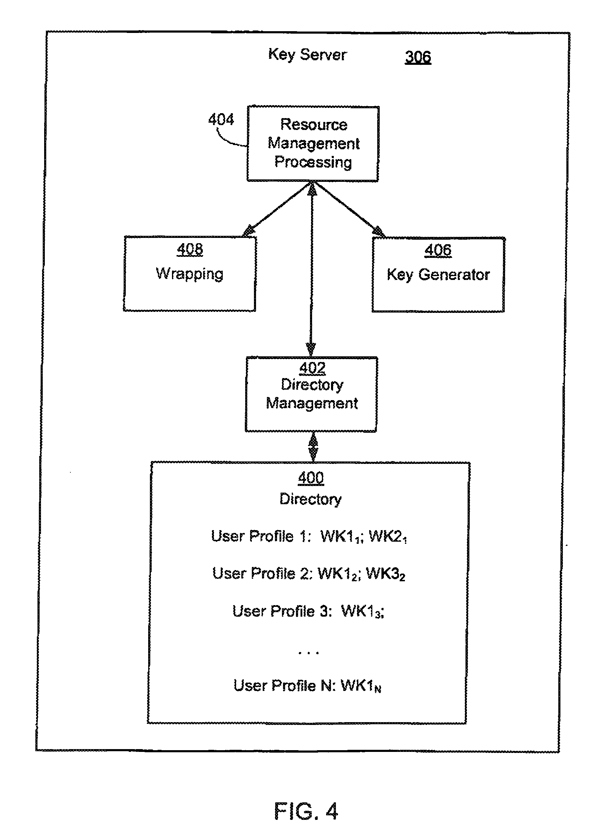

Figure 4 is a schematic block diagram of functional aspects of a key server 306 used to manage wrapped workgroup keys, according to a possible embodiment of the present disclosure. The key server 306 manages key distribution to users and administrators by distributing workgroup keys for use in protecting resources, as well as managing a directory of user profiles that includes workgroup keys stored in a secure, wrapped manner specific to each user that is a part of a community of interest. In the embodiment shown, the key server 306 contains a directory 400, which includes a number of user profiles, as described in further detail below. The key server 306 also includes a directory management module 402, a resource management module 404, a key generator module 406, and a wrapping module 408.

The directory 400 includes a plurality of user profiles, each of which can include one or more workgroup keys. The workgroup keys stored in each user profile define that user's membership within a community of interest. The user profiles can include profiles of users, administrators, and other individuals having access to data associated with a community of interest. The directory 400 can be managed in a database, file structure, or other arrangement. As illustrated, each workgroup key (WK) stored in a user's profile is encrypted with a second encryption key associated specifically with that user. For example, in the embodiment shown, the directory includes a number of profile entries that include workgroup keys, while each key (e.g., WK1, WK2, WK3, etc.) are encrypted with a user-specific key for each user. Each workgroup key associated with a user can then be accessed by the user based on that user's possession of a decryption key.

The directory management module 402 operates on the directory 400 to store information into and retrieve information from the various user profiles. Although in the embodiment shown the directory includes only workgroup keys, this is intended as only exemplary, as other information will typically be stored in the directory as well. For example, various details regarding resources, services, and users are provided, and associations between these components are defined in the directory 400. In certain embodiments, the directory management module 402 manages the directory 400 using the Active Directory directory service by Microsoft Corporation of Redmond, Washington. Other directory services can be used as well.

The resource management module 404 processes requests received from users and distributes workgroup keys to the users and to resources for protection of those resources. In certain embodiments, the resource management module 404 establishes secure communication between the key server 306 and external systems, such as the requesting computing device 302 and connected to a requested resource host 304 of Figure 3.

The key generator module 406 generates workgroup keys for each community of interest, or for rekeying a community of interest. The workgroup keys (WK) for each community of interest can vary in length or type. Example instances for generating workgroup keys are described below in conjunction with Figures 5-8.

The wrapping module 408 wraps the workgroup keys generated by the key generator module 406 in a second key of administrators and/or users (e.g. a public key of a public/private key pair), such that the workgroup keys can be maintained securely within the directory 400 and transmitted securely to a user, administrator, or resource. Because users and administrators are assumed to possess the corresponding user- or administrator-specific decryption key (e.g. a private key of a public/private key pair), the workgroup key can be maintained securely both during storage and transmission.

Preferably, the key server maintains the modules within a "black box" arrangement, such that a user cannot access a clear text version of any workgroup key (WK) associated with a community of interest. The present disclosure ensures that workgroup keys are transmitted only in encrypted or "wrapped" form, thereby maintaining security for each community of interest and associated set of resources. The black box maintenance of workgroup keys can be accomplished, in certain embodiments, by way of batch processing of workgroup key creation and encryption to avoid requiring storage of the clear text workgroup key. The batch processing can be directed to operate on an object stored in a predetermined location in memory, rather than being passed particular data representing the workgroup key, to further secure the key. Furthermore, storage of private keys and temporary storage of workgroup keys at a user device can be provided by use of certified keystores as can be found in smart cards, or held within a secure software keystore, such as the one provided within a Windows operating system provided by Microsoft Corporation of Redmond, Washington. Other possibilities exist as well for secure management of workgroup keys and private keys as well.

Figure 5 is an example flowchart of methods and systems 500 for managing a community of interest having access to a resource. The methods and systems as described provide an arrangement for defining a community of interest, and relating that community of interest to a resource and one or more users. The methods and systems described herein can be performed using a key server, such as the key server illustrated in Figures 2-4, above.

Operational flow is instantiated at a start operation 502, in which an administrator accesses the key server, and is determined to have rights to create and manage a community of interest. The administrator's rights can be defined in a directory, such as directory 400 of Figure 4, managed by or accessible to the key server.

Operational flow proceeds to a workgroup key creation module 504, which generates a workgroup key (e.g. key WK) to be used to protect one or more resources. The workgroup key creation module 504 can be executed by the key server (e.g., by key generator 406 of Figure 4). The workgroup key can be any of a number of types/sizes of encryption keys, and is typically held, while in a clear text format, within a "black box" module such as the key generator and/or wrapping module of Figure 4, to obscure the key from external software or the administrator.

An encryption module 506 encrypts at the key server the preserved workgroup key with a second encryption key that is specific to an administrator capable of granting access to the resource. In certain embodiments, the second encryption key can be a public key of a public/private key pair. Such an encrypted key, noted herein as WK_{A}, can be stored in a directory within the key server without concern for access to the directory, since only that administrator can retrieve the original workgroup key WK by applying the private key of the administrator's public/private key pair to decrypt the encrypted key. Other encryption key pairs (symmetric or asymmetric keys) could be used as well.

Optionally, the encryption module 506 can encrypt multiple copies of the workgroup key with different public keys of different administrative users (e.g., WK_{A1}-WK_{AN}) and store those keys in the administrators' profiles within a directory, thereby allowing each administrative user to access the workgroup key and grant others access to the workgroup key and associated resource(s).

A storage module 508 stores the workgroup key, encrypted with a second, administrator-specific key (i.e. WK_{A}), in a profile of the administrator(s) within the directory managed on the key server. At this point in operation of the methods and systems 500, the administrator(s) have access to the workgroup key, and can make that key available to other users, thereby enabling access to the protected computing resource.

A protection module 510 transmits the encrypted workgroup key WK_{A} securely to the location of a resource (e.g. to a requested resource host 304 as in Figure 3) to apply to the resource. For example, in embodiments in which the resource is a data storage location, the data stored at that location (or separate information providing access to that data, e.g., another encryption key, a data header address, etc.) can be encrypted using the workgroup key. The workgroup key WK_{A}, when received at the resource, is decrypted and used by the administrator to protect the resource, and then discarded by the resource, such that the key server provides the exclusive mechanism for access to the key. Each workgroup key provides a common protection mechanism for one or more computing resources, and therefore defines the community of interested users (i.e. the community of interest) that can access the resource.

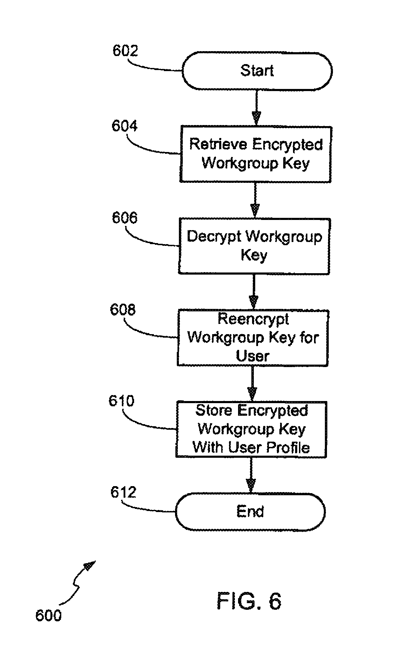

An association module 512 optionally can be performed using the key server to associate the workgroup key WK with one or more users, as directed by an administrator having access to the workgroup key. The association module 512 generally makes the workgroup key available to a user such that the user can access the workgroup key and the corresponding resource protected by the workgroup key. For example, the association module 512 can include reencryption of the workgroup key using a user-specific second encryption key, and storing the user-encrypted version of the workgroup key (e.g., WK_{U}) in a location accessible to the user (e.g. in a user profile within a directory, such as directory 400 of Figure 4). Additional details regarding an example of operation of the association module 512 are described in conjunction with Figure 6, below. End operation 514 corresponds to completed establishment of community of interest-based access to computing resources using a wrapped workgroup key.

Through use of the methods and systems 500, additional workgroup keys can be created, and different sets of computing resources can be protected using those keys. Each workgroup key can be associated with a unique number and collection of users and resources, and defines the community of interest of users that can access that particular set of resources.

Now referring to Figure 6, an example flowchart of methods and systems 600 are shown for associating a user with a workgroup key associated with a community of interest. The methods and systems 600 provide one example process by which an administrator can make available a workgroup key to a user, thereby adding that user to a community of interest. In general, the methods and systems 600 provide re-wrapping of the workgroup key created using the methods and systems 500 of Figure 5, so that the workgroup key is accessible to and able to be decrypted by a user who is added as part of the community of interest.

Operational flow is instantiated at a start operation 602, which corresponds to an administrator accessing a key server to add the user to the community of interest. Operational flow proceeds to a retrieve module 604, which retrieves the workgroup key accessible to the administrator from a directory, such as the directory 400 of Figure 4. The workgroup key stored in the directory is preferably encrypted such that only the administrator can access the key, such as by encrypting the key using a public key of a public/private key pair associated with the administrator. In the present disclosure, the workgroup key encrypted for access by the administrator (and not accessible to a user) is denoted as a workgroup key WK_{A}.

Operational flow proceeds to a decryption module 606, which decrypts the encrypted workgroup key WK_{A} using a decryption key complementary to the key used to encrypt the workgroup key, resulting in a clear text workgroup key WK. In certain embodiments, the decryption module 606 uses a private key managed by the administrator to decrypt the encrypted workgroup key WK_{A} that is the complement of the public key used to encrypt the key. Following decryption, the workgroup key WK is preferably stored within a "black box" such that the clear text workgroup key is not maintained in memory Following operation of the decryption module 606, a clear text workgroup key (WK) resides on the key server, preferably stored within a black box or other protective logical construct such that the workgroup key is not exposed to a user or administrator of a resource or network.

Operational flow proceeds to a reencryption module 608 which reencrypts the clear text workgroup key (WK) using an encryption key associated with a user to form a reencrypted workgroup key accessible to that user, WK_{U}. In certain embodiments, the encryption key used that is accessible to the user is a public key of a public/private key pair associated with the user.

A storage module 610 stores the encrypted workgroup key WK_{U} in a location accessible to the user and on the key server such that, upon request, the user can retrieve and decrypt this user-specific workgroup key. In certain embodiments, the encrypted workgroup key WK_{U} is stored a directory, preferably in a profile of the user as illustrated in Figure 4. Operational flow terminates at an end operation 612, signifying completion of adding a user to a community of interest by re-wrapping a workgroup key and storing that workgroup key in a manner accessible to that user.

Referring now to Figures 5-6 generally, although certain aspects of these systems are described as preferably operating within a "black box" construct to prevent user accessibility of a clear text workgroup key, in certain embodiments all of the modules are performed within such a black box, and the clear text workgroup key is not transmitted between computing systems thereby ensuring that the workgroup key is not exposed to an unauthorized user or persisted on a computing system in clear text.

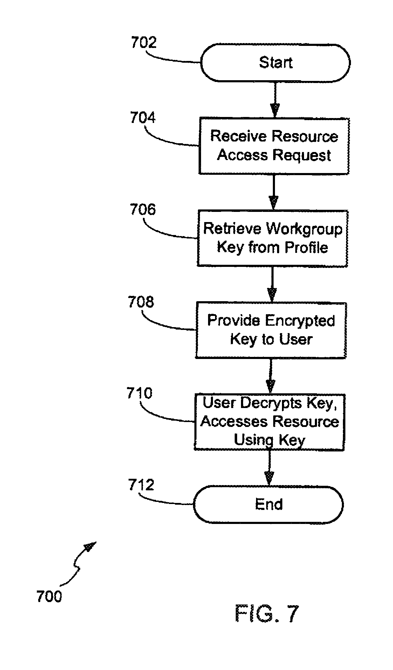

Now referring to Figure 7, an example flowchart of methods and systems 700 for accessing a resource as a member of a community of interest is illustrated. The methods and systems 700 illustrate operation of a key server, user device, and resource host when a user requests access to a resource restricted by a workgroup key to users within a community of interest. Operation of the methods and systems 700 typically occurs after completion of the creation of a community of interest (e.g., as illustrated in Figure 5) and addition of a user to the community of interest by re-wrapping a workgroup key for use by that user (e.g., as illustrated in Figure 6).

Operational flow is instantiated at a start operation 702, which occurs upon a user initially logging on to a network and registering with a key server. The user logging on to the network can occur in any of a number of ways, including by reprovisioning the computing system on which the client is working, or by use of a smart card authentication system. Other authentication systems, such as PIN-based authentication, can be used as well.

Operational flow proceeds to a request module 704, which receives a request for access to a resource in the network including the key server. The request module 704 receives a request to access resources at the key server, and can correspond to initial logging into a directory service by a user, or access of the key server at the time of a resource request. A retrieval module 706 retrieves a user profile associated with the user, and provides to the user each of the user's workgroup keys, as well as other information stored in the user profile. The retrieval module obtains the workgroup keys that are associated with a user from the directory in a format encrypted (WK_{U}) such that the user can access the workgroup key (WK) if that user possesses the corresponding decryption key (e.g. the user's private key of a public/private key pair). A provision module 708 transmits the encrypted keys (WK_{U}) to the user, whose computing system preferably contains a secure communication module that can manage storage and decryption of the workgroup key for use in accessing a resource. In decryption module 710 the user's requesting computing system (e.g. system 302 of Figure 3) decrypts the key WK_{U} to obtain clear text workgroup key (WK) for use. An end operation corresponds to completed access of the desired resource and optional logging off by the user, at which time the user's computing system deletes its copy of the workgroup key (WK).

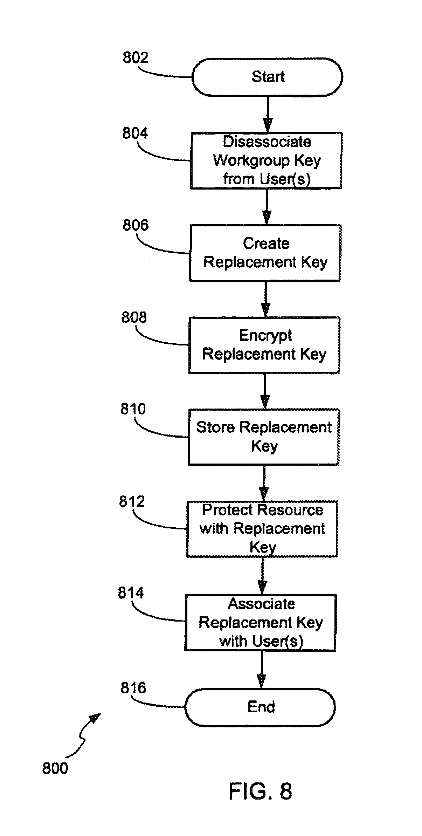

Figure 8 is an example flowchart of methods and systems 800 for rekeying a community of interest with a replacement workgroup key. The methods and systems 800 generally can be used by an administrator to replace a key that may be compromised, or may occur automatically at a key server periodically as a security measure to ensure that the workgroup key access group (i.e. the community of interest) has not been compromised.

Operational flow within the methods and systems 800 are instantiated at a start operation 802, which corresponds to administrator or key server-initiated rekeying of at least one community of interest. Operational flow proceeds to a disassociation module 804, which deletes a selected workgroup key from one or more users' profiles within the directory managed by the key server.

The remainder of the re-keying operation corresponds generally to the methods and systems 500 of Figure 5 for initially creating a community of interest.

A replacement key module 806 generates a replacement workgroup key which generates a replacement workgroup key (e.g. key WK') to be used to protect one or more resources. The replacement key module 806 can be executed by the key server (e.g., by key generator 406 of Figure 4). The workgroup key WK' can be any of a number of types/sizes of encryption keys, and can be entirely different from the key it replaces.

An encryption module 808 encrypts at the key server the preserved replacement workgroup key with a second encryption key that is specific to an administrator capable of granting access to the resource, e.g., a public key of a public/private key pair. This encrypted key, noted herein as WK'_{A}, can be stored in a directory within the key server without concern for access to the directory, since only that administrator can retrieve the original workgroup key WK by applying the private key of the administrator's public/private key pair to decrypt the encrypted key. Other encryption key pairs (symmetric or asymmetric keys) could be used as well. A storage module 810 stores the replacement workgroup key, encrypted with the second, administrator-specific key (i.e. WK'_{A}), in a profile of the administrator(s) within the directory managed on the key server. At this point in operation of the methods and systems 800, the administrator(s) have access to the replacement workgroup key, and can make that key available to other users, thereby enabling access to the protected computing resource.

A protection module 812 transmits the new secured key WK'_{A} securely to each location of resources protected by the key being replaced. For example, the directory can include a list of resources protected by workgroup key, and the key server can distribute a new key WK'_{A} to those same resources for replacement of the original key protection scheme by the administrator, who can access key WK' by decrypting WK'_{A} using the methods and systems described herein.

An association module 814 associates the workgroup key WK' with each of the users previously associated with workgroup key WK. The association module 814 generally makes the workgroup key WK' available to each user in the community of interest such that the user can access the workgroup key and the corresponding resource protected by the workgroup key. For example, the association module 512 can include reencryption of the workgroup key using a user-specific second encryption key, and storing the user-encrypted version of the workgroup key (e.g., WK'_{U}) in a location accessible to the user (e.g. in a user profile within a directory, such as directory 400 of Figure 4). End operation 816 corresponds to completed replacement of a workgroup key with respect to a community of interest including at least one user, for managing access to computing resources using a wrapped workgroup key.

Similarly to the disassociation module 804, the key server or administrator can remove one or more users from a community of interest without rekeying the community of interest simply by deleting that user's specific workgroup key WK_{U} from his profile within the directory. Additionally, other key management techniques can be implemented as well. For example, the workgroup key can be used to encrypt additional keys, or other keys can be included to encrypt the administrator's or user's public/private key pairs. Other key arrangements are possible as well.

Throughout the systems and methods described in Figures 5-9, users and administrators access "wrapped" workgroup keys, which are created and used to define communities of interest, which define membership in groups that can access computing resources in a secured network. The systems and methods can be implemented in any of a number of types of networks and to protect any of a number of types of computing resources, as explained above in conjunction with Figures 1-4, as well as Figure 9, below.

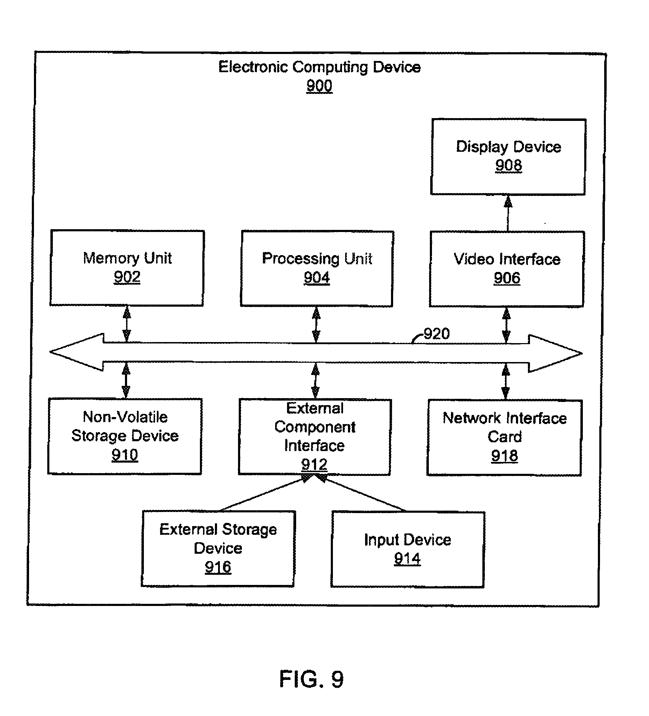

Figure 9 is a block diagram illustrating example physical components of an electronic computing device 900. A computing device, such as electronic computing device 900, typically includes at least some form of computer-readable media. Computer readable media can be any available media that can be accessed by the electronic computing device 900. By way of example, and not limitation, computer-readable media might comprise computer storage media and communication media.

As illustrated in the example of Figure 9, electronic computing device 900 comprises a memory unit 902. Memory unit 902 is a computer-readable data storage medium capable of storing data and/or instructions. Memory unit 902 may be a variety of different types of computer-readable storage media including, but not limited to, dynamic random access memory (DRAM), double data rate synchronous dynamic random access memory (DDR SDRAM), reduced latency DRAM, DDR2 SDRAM, DDR3 SDRAM, Rambus RAM, or other types of computer-readable storage media.

In addition, electronic computing device 900 comprises a processing unit 904. As mentioned above, a processing unit is a set of one or more physical electronic integrated circuits that are capable of executing instructions. In a first example, processing unit 904 may execute software instructions that cause electronic computing device 900 to provide specific functionality. In this first example, processing unit 904 may be implemented as one or more processing cores and/or as one or more separate microprocessors. For instance, in this first example, processing unit 904 may be implemented as one or more Intel Core 2 microprocessors. Processing unit 904 may be capable of executing instructions in an instruction set, such as the x86 instruction set, the POWER instruction set, a RISC instruction set, the SPARC instruction set, the IA-64 instruction set, the MIPS instruction set, or another instruction set. In a second example, processing unit 904 may be implemented as an ASIC that provides specific functionality. In a third example, processing unit 904 may provide specific functionality by using an ASIC and by executing software instructions.

Electronic computing device 900 also comprises a video interface 906. Video interface 906 enables electronic computing device 900 to output video information to a display device 908. Display device 908 may be a variety of different types of display devices. For instance, display device 908 may be a cathode-ray tube display, an LCD display panel, a plasma screen display panel, a touch-sensitive display panel, a LED array, or another type of display device.

In addition, electronic computing device 900 includes a non-volatile storage device 910. Non-volatile storage device 910 is a computer-readable data storage medium that is capable of storing data and/or instructions. Non-volatile storage device 910 may be a variety of different types of non-volatile storage devices. For example, non-volatile storage device 910 may be one or more hard disk drives, magnetic tape drives, CD-ROM drives, DVD-ROM drives, Blu-Ray disc drives, or other types of non-volatile storage devices.

Electronic computing device 900 also includes an external component interface 912 that enables electronic computing device 900 to communicate with external components. As illustrated in the example of Figure 9, external component interface 912 enables electronic computing device 900 to communicate with an input device 914 and an external storage device 916. In one implementation of electronic computing device 900, external component interface 912 is a Universal Serial Bus (USB) interface. In other implementations of electronic computing device 900, electronic computing device 900 may include another type of interface that enables electronic computing device 900 to communicate with input devices and/or output devices. For instance, electronic computing device 900 may include a PS/2 interface. Input device 914 may be a variety of different types of devices including, but not limited to, keyboards, mice, trackballs, stylus input devices, touch pads, touch-sensitive display screens, or other types of input devices. External storage device 916 may be a variety of different types of computer-readable data storage media including magnetic tape, flash memory modules, magnetic disk drives, optical disc drives, and other computer-readable data storage media.

In the context of the electronic computing device 900, computer storage media includes volatile and nonvolatile, removable and non-removable media implemented in any method or technology for storage of information such as computer readable instructions, data structures, program modules or other data. Computer storage media includes, but is not limited to, various memory technologies listed above regarding memory unit 902, non-volatile storage device 910, or external storage device 916, as well as other RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium that can be used to store the desired information and that can be accessed by the electronic computing device 900.

In addition, electronic computing device 900 includes a network interface card 918 that enables electronic computing device 900 to send data to and receive data from an electronic communication network. Network interface card 918 may be a variety of different types of network interface. For example, network interface card 918 may be an Ethernet interface, a token-ring network interface, a fiber optic network interface, a wireless network interface (e.g., WiFi, WiMax, etc.), or another type of network interface.

Electronic computing device 900 also includes a communications medium 920. Communications medium 920 facilitates communication among the various components of electronic computing device 900. Communications medium 920 may comprise one or more different types of communications media including, but not limited to, a PCI bus, a PCI Express bus, an accelerated graphics port (AGP) bus, an Infiniband interconnect, a serial Advanced Technology Attachment (ATA) interconnect, a parallel ATA interconnect, a Fiber Channel interconnect, a USB bus, a Small Computer System Interface (SCSI) interface, or another type of communications medium.

Communication media, such as communications medium 920, typically embodies computer-readable instructions, data structures, program modules or other data in a modulated data signal such as a carrier wave or other transport mechanism and includes any information delivery media. The term "modulated data signal" refers to a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above should also be included within the scope of computer-readable media. Computer-readable media may also be referred to as computer program product.

Electronic computing device 900 includes several computer-readable data storage media (i.e., memory unit 902, non-volatile storage device 910, and external storage device 916). Together, these computer-readable storage media may constitute a single data storage system. As discussed above, a data storage system is a set of one or more computer-readable data storage mediums. This data storage system may store instructions executable by processing unit 904. Activities described in the above description may result from the execution of the instructions stored on this data storage system. Thus, when this description says that a particular logical module performs a particular activity, such a statement may be interpreted to mean that instructions of the logical module, when executed by processing unit 904, cause electronic computing device 900 to perform the activity. In other words, when this description says that a particular logical module performs a particular activity, a reader may interpret such a statement to mean that the instructions configure electronic computing device 900 such that electronic computing device 900 performs the particular activity.

One of ordinary skill in the art will recognize that additional components, peripheral devices, communications interconnections and similar additional functionality may also be included within the electronic computing device 900 without departing from the scope of the present invention as recited within the attached claims.

The above specification, examples and data provide a complete description of the manufacture and use of the composition of the invention. Since many embodiments of the invention can be made without departing from the scope of the invention, the invention resides in the claims hereinafter appended.

## Claims

1. A method of managing a community of interest having access to a resource, the method comprising:
creating a workgroup key associated with a community of interest;
protecting one or more resources associated with the community of interest using the workgroup key;
encrypting the workgroup key using a public key associated with an administrator of the community of interest, the public key included with a private key in a public/private key pair associated with the administrator;
storing the encrypted workgroup key; and
associating the workgroup key with a user, thereby adding the user to the community of interest;
**characterised in that** associating the workgroup key with a user comprises:
retrieving the encrypted workgroup key;
decrypting the workgroup key encrypted with the private key associated with the administrator using the private key associated with the administrator; and
encrypting the decrypted workgroup key using a public key associated with a user to be added to the community of interest, the public key included with a private key in a public/private key pair associated with the user.

2. The method of claim 1, wherein associating the workgroup key with a user further comprises storing the workgroup key encrypted with the public key associated with the user in a location accessible to the user.

3. The method of claim 2, further comprising removing the user from the community of interest.

4. The method of claim 2, wherein removing the user from the community of interest comprises deleting the workgroup key encrypted with the public key associated with the user from the location in which it is stored.

5. The method of claim 2, wherein the location comprises a profile associated with the user on a key server.

6. The method of claim 1, further comprising rekeying the community of interest, wherein rekeying the community of interest comprises:
disassociating the workgroup key from the user;
creating a second workgroup key associated with the community of interest;
protecting the one or more resources associated with the community of interest using the second workgroup key;
encrypting the second workgroup key using a public key associated with an administrator of the community of interest, the public key included with a private key in a public/private key pair associated with the administrator;
storing the encrypted second workgroup key; and
associating the second workgroup key with a user, thereby including the user in the community of interest.

7. The method of claim 1, wherein the one or more resources includes at least one resource selected from the group consisting of:
a communication port;
a server; and
data storage.

8. The method of claim 2, further comprising:
receiving a request for access to a resource at a key server from a user;
retrieving the workgroup key encrypted using a public key of a public/private key pair associated with the user from a directory;
providing the encrypted workgroup key to the user.

9. A method of rekeying a community of interest including a plurality of users, each of the users having access to a workgroup key used to protect a resource, the method comprising:
disassociating a workgroup key from each of the plurality of users having access to the workgroup key;
creating a replacement workgroup key associated with the community of interest, the replacement workgroup key protecting the resource protected by the workgroup key;
encrypting the replacement workgroup key using a key associated with an administrator of the community of interest;
storing the encrypted replacement workgroup key; and
associating the replacement workgroup key with each of the plurality of users, thereby including each of the plurality of users in the community of interest;
wherein the key is a public key of a public/private key pair associated with the administrator; and
wherein associating the replacement workgroup key with each of the plurality of users comprises:
retrieving the encrypted replacement workgroup key;
decrypting the replacement workgroup key encrypted with the public key associated with the administrator using the private key associated with the administrator; and
for each of the plurality of users, encrypting the decrypted workgroup key using a public key associated with that user, the public key included with a private key in a public/private key pair associated with the user.

10. The method of claim 9, further comprising:
receiving a request for access to a resource at a key server from a user;
retrieving the replacement workgroup key encrypted using a public key of a public/private key pair associated with the user from a directory; and
providing the encrypted replacement workgroup key to the user.

11. The method of claim 9, wherein the resource is selected from the group consisting of:
a communication port;
a server; and
data storage.

12. A system for managing membership in a community of interest, the system including:
a key server accessible to a plurality of users and managing access to a plurality of resources, the key server including:
a memory configured to store a directory including a plurality of user profiles, each user profile associated with a user;
a programmable circuit communicatively connected to the memory, the programmable circuit configured to execute program instructions to:
create a workgroup key associated with a community of interest;
protect one or more of the plurality of resources associated with the community of interest using the workgroup key;
encrypt the workgroup key using a public key associated with an administrator of the community of interest, the public key included with a private key in a public/private key pair associated with the administrator;
store the encrypted workgroup key in a user profile of the administrator, the user profile of the administrator included in the directory; and
associate the workgroup key with one or more users from among the plurality of users, thereby adding each of the one or more users to the community of interest;
**characterised in that** the programmable circuit is configured to associate the workgroup key with one or more uses by executing program instructions to:
retrieve the encrypted workgroup key;
decrypt the workgroup key encrypted with the private key associated with the administrator using the private key associated with the administrator; and
encrypt the decrypted workgroup key using a public key associated with a user to be added to the community of interest, the public key included with a private key in a public/private key pair associated with the user.

13. The system of claim 12, wherein the programmable circuit is further configured to:
receive a request for access to a resource at a key server from a user;
retrieve the workgroup key encrypted using a public key of a public/private key pair associated with the user from a directory; and
provide the encrypted workgroup key to the user.

14. The system of claim 12, wherein the resource is selected from the group consisting of:
a communication port;
a server; and
data storage.

15. The system of claim 12, wherein the programmable circuit is further programmed to:
disassociate the workgroup key from each of the one or more users;
create a second workgroup key associated with the community of interest;
protect the one or more resources associated with the community of interest using the second workgroup key;
encrypt the second workgroup key using a public key associated with an administrator of the community of interest, the public key included with a private key in a public/private key pair associated with the administrator;
store the encrypted second workgroup key in a user profile of the administrator; and
associate the second workgroup key with each of the one or more users, thereby including the one or more users in the community of interest.

16. The system of claim 12, wherein the programmable circuit is further programmed to remove the user from the community of interest.

## Patentansprüche

1. Verfahren zur Verwaltung einer Interessengemeinschaft mit Zugriff auf eine Ressource, wobei das Verfahren folgendes umfasst:
das Erzeugen eins Arbeitsgruppenschlüssels, der einer Interessengemeinschaft zugeordnet ist;
das Schützen einer oder mehrerer Ressourcen, die der Interessengemeinschaft zugeordnet sind, unter Verwendung des Arbeitsgruppenschlüssels;
das Chiffrieren des Arbeitsgruppenschlüssels unter Verwendung eines öffentlichen Schlüssels, der einem Administrator der Interessengemeinschaft zugeordnet ist, wobei der öffentliche Schlüssel gemeinsam mit einem privaten Schlüssel in einem Paar aus öffentlichem und privatem Schlüssel enthalten ist, das dem Administrator zugeordnet ist;
das Speichern des chiffrierten Arbeitsgruppenschlüssels; und
das Zuordnen des Arbeitsgruppenschlüssels zu einem Benutzer, wodurch der Benutzer der Interessengemeinschaft hinzugefügt wird;
**dadurch gekennzeichnet, dass** das Zuordnen des Arbeitsgruppenschlüssels zu einem Benutzer folgendes umfasst:
das Abrufen des chiffrierten Arbeitsgruppenschlüssels;
das Dechiffrieren des Arbeitsgruppenschlüssels, der mit dem dem Administrator zugeordneten privaten Schlüssel chiffriert ist, unter Verwendung des dem Administrator zugeordneten privaten Schlüssels;
das Chiffrieren des dechiffrierten Arbeitsgruppenschlüssels unter Verwendung eines einem der Interessengemeinschaft hinzuzufügenden Benutzer zugeordneten öffentlichen Schlüssels, wobei der öffentliche Schlüssel gemeinsam mit einem privaten Schlüssel in einem dem Benutzer zugeordneten Paar aus öffentlichem und privatem Schlüssel enthalten ist.

2. Verfahren nach Anspruch 1, wobei das Zuordnen des Arbeitsgruppenschlüssels zu einem Benutzer ferner das Speichern des mit dem dem Benutzer zugeordneten öffentlichen Schlüssel chiffrierten Arbeitsgruppenschlüssels an einem Ort erfolgt, der für den Benutzer zugänglich ist.

3. Verfahren nach Anspruch 2, wobei dieses ferner das Entfernen des Benutzers aus der Interessengemeinschaft umfasst.

4. Verfahren nach Anspruch 2, wobei das Entfernen des Benutzers aus der Interessengemeinschaft das Löschen des Arbeitsgruppenschlüssels, der mit dem öffentlichen Schlüssel chiffriert ist, der dem Benutzer zugeordnet ist, von dem Ort umfasst, an dem er gespeichert ist.

5. Verfahren nach Anspruch 2, wobei der Ort ein Profil umfasst, das dem Benutzer auf einem Schlüsselserver zugeordnet ist.

6. Verfahren nach Anspruch 1, wobei dieses ferner das neue Verschlüsseln der Interessengemeinschaft umfasst, wobei das neue Verschlüsseln der Interessengemeinschaft folgendes umfasst:
das Aufheben der Zuordnung des Arbeitsgruppenschlüssels zu dem Benutzer;
das Erzeugen eines zweiten Arbeitsgruppenschlüssels, der der Interessengemeinschaft zugeordnet ist;
das Schützen der einen oder der mehreren Ressourcen, welche der Interessengemeinschaft zugeordnet sind, unter Verwendung des zweiten Arbeitsgruppenschlüssels;
das Chiffrieren des zweiten Arbeitsgruppenschlüssels unter Verwendung eines öffentlichen Schlüssels, der einem Administrator der Interessengemeinschaft zugeordnet ist, wobei der öffentliche Schlüssel gemeinsam mit einem privaten Schlüssel in einem Paar aus öffentlichem und privatem Schlüssel enthalten ist, das dem Administrator zugeordnet ist;
das Speichern des chiffrierten zweiten Arbeitsgruppenschlüssels; und
das Zuordnen des zweiten Arbeitsgruppenschlüssels zu einem Benutzer, wodurch der Benutzer der Interessengemeinschaft hinzugefügt wird.

7. Verfahren nach Anspruch 1, wobei die eine oder die mehreren Ressourcen mindestens eine Ressource aufweisen, die aus der Gruppe ausgewählt wird, die folgendes umfasst:
einen Kommunikationsanschluss;
einen Server; und
einen Datenspeicher.

8. Verfahren nach Anspruch 2, wobei dieses ferner folgendes umfasst:
das Empfangen einer Anforderung für einen Zugriff auf eine Ressource von einem Benutzer an einem Schlüsselserver;
das Abrufen des Arbeitsgruppenschlüssels aus einem Verzeichnis, wobei der Arbeitsgruppenschlüssel unter Verwendung eines öffentlichen Schlüssels eines dem Benutzer zugeordneten Paars aus einem öffentlichen und einem privaten Schlüssel chiffriert ist;
das Bereitstellen des chiffrierten Arbeitsgruppenschlüssels an den Benutzer.

9. Verfahren zur neuen Verschlüsselung einer Interessengemeinschaft, die eine Mehrzahl von Benutzern aufweist, wobei jeder der Benutzer Zugriff auf einen Arbeitsgruppenschlüssel aufweist, der eingesetzt wird, um eine Ressource zu schützen, wobei das Verfahren folgendes umfasst:
das Aufheben der Zuordnung eines Arbeitsgruppenschlüssels von jedem Benutzer der Mehrzahl von Benutzern mit Zugriff auf den Arbeitsgruppenschlüssel;
das Erzeugen eines ersatzweisen Arbeitsgruppenschlüssels, der der Interessengemeinschaft zugeordnet ist, wobei der ersatzweise Arbeitsgruppenschlüssel die durch den Arbeitsgruppenschlüssel geschützte Ressource schützt;
das Chiffrieren des ersatzweisen Arbeitsgruppenschlüssels unter Verwendung eines Schlüssels, der einem Administrator der Interessengemeinschaft zugeordnet ist;
das Speichern des chiffrierten ersatzweisen Arbeitsgruppenschlüssels; und
das Zuordnen des ersatzweisen Arbeitsgruppenschlüssels zu jedem Benutzer der Mehrzahl von Benutzern, wodurch jeder Benutzer der Mehrzahl von Benutzern der Interessengemeinschaft hinzugefügt wird;
wobei es sich bei dem Schlüssel um einen öffentlichen Schlüssel eines Paares aus einem öffentlichen und einem privaten Schlüssel handelt, das dem Administrator zugeordnet ist; und
wobei das Zuordnen des ersatzweisen Arbeitsgruppenschlüssels zu jedem Benutzer der Mehrzahl von Benutzern folgendes umfasst:
das Abrufen des chiffrierten ersatzweisen Arbeitsgruppenschlüssels;
das Dechiffrieren des ersatzweisen Arbeitsgruppenschlüssels, der mit dem öffentlichen Schlüssel chiffriert ist, der dem Administrator zugeordnet ist, unter Verwendung des dem Administrator zugeordneten privaten Schlüssels; und
für jeden Benutzer der Mehrzahl von Benutzern das Chiffrieren des dechiffrierten Arbeitsgruppenschlüssels unter Verwendung eines dem jeweiligen Benutzer zugeordneten öffentlichen Schlüssels, wobei der öffentliche Schlüssel gemeinsam mit einem privaten Schlüssel in einem Paar aus einem öffentlichen und einem privaten Schlüssel enthalten ist, das dem Benutzer zugeordnet ist.

10. Verfahren nach Anspruch 9, wobei dieses ferner folgendes umfasst:
das Empfangen einer Anforderung für einen Zugriff auf eine Ressource an einem Schlüsselserver von einem Benutzer;
das Abrufen aus einem Verzeichnis des ersatzweisen Arbeitsgruppenschlüssels, der unter Verwendung eines öffentlichen Schlüssels eines Paares aus einem öffentlichen und einem privaten Schlüssel chiffriert ist, das dem Benutzer zugeordnet ist; und
das Bereitstellen des chiffrierten ersatzweisen Arbeitsgruppenschlüssels an den Benutzer.

11. Verfahren nach Anspruch 9, wobei die Ressource aus der Gruppe ausgewählt wird, die folgendes umfasst:
einen Kommunikationsanschluss;
einen Server; und
einen Datenspeicher.

12. System zum Verwalten der Mitgliedschaft in einer Interessengemeinschaft, wobei das System folgendes aufweist:
einen Schlüsselserver, auf den eine Mehrzahl von Benutzern zugreifen kann und der den Zugriff auf eine Mehrzahl von Ressourcen verwaltet, wobei der Schlüsselserver folgendes aufweist:
einen Speicher, der so konfiguriert ist, dass er ein Verzeichnis speichert, das eine Mehrzahl von Benutzerprofilen aufweist, wobei jedes Benutzerprofil einem Benutzer zugeordnet ist;
einen programmierbaren Schaltkreis, der kommunikationsfähig mit dem Speicher verbunden ist, wobei der programmierbare Schaltkreis so konfiguriert ist, dass er Programmanweisungen ausführt, um:
einen Arbeitsgruppenschlüssel zu erzeugen, der einer Interessengemeinschaft zugeordnet ist;
eine oder mehrere Ressourcen der Mehrzahl von Ressourcen, die der Interessengemeinschaft zugeordnet sind, unter Verwendung des Arbeitsgruppenschlüssels zu schützen;
den Arbeitsgruppenschlüssel unter Verwendung eines öffentlichen Schlüssels zu chiffrieren, der einem Administrator der Interessengemeinschaft zugeordnet ist, wobei der öffentliche Schlüssel gemeinsam mit einem privaten Schlüssel in einem Paar aus einem öffentlichen und einem privaten Schlüssel enthalten ist, das dem Administrator zugeordnet ist;
den chiffrierten Arbeitsgruppenschlüssel in einem Benutzerprofil des Administrators zu speichern, wobei das Benutzerprofil des Administrators in dem Verzeichnis enthalten ist; und
den Arbeitsgruppenschlüssel einem oder mehreren Benutzern der Mehrzahl von Benutzern zuzuordnen, wodurch jeder eine oder jeder der mehreren Benutzer der Interessengemeinschaft hinzugefügt wird;
**dadurch gekennzeichnet, dass** der programmierbare Schaltkreis so konfiguriert ist, dass der Arbeitsgruppenschlüssel durch die Ausführung von Programmanweisungen einer oder mehreren Nutzungen zugeordnet wird, um:
den chiffrierten Arbeitsgruppenschlüssel abzurufen;
den mit dem privaten Schlüssel, der dem Administrator zugeordnet ist, chiffrierten Arbeitsgruppenschlüssel unter Verwendung des dem Administrator zugeordneten privaten Schlüssels zu dechiffrieren; und
den dechiffrierten Arbeitsgruppenschlüssel unter Verwendung eines öffentlichen Schlüssels zu chiffrieren, der einem Benutzer zugeordnet ist, der der Interessengemeinschaft hinzugefügt werden soll, wobei der öffentliche Schlüssel gemeinsam mit einem privaten Schlüssel in einem Paar aus einem öffentlichen und einem privaten Schlüssel enthalten ist, das dem Benutzer zugeordnet ist.

13. System nach Anspruch 12, wobei der programmierbare Schaltkreis ferner so konfiguriert ist, dass folgendes ermöglicht wird:
das Empfangen einer Anforderung für einen Zugriff auf eine Ressource an einem Schlüsselserver von einem Benutzer;
das Abrufen aus einem Verzeichnis des Arbeitsgruppenschlüssels, der unter Verwendung eines öffentlichen Schlüssels eines Paares aus einem öffentlichen und einem privaten Schlüssel, das dem Benutzer zugeordnet ist; und
das Bereitstellen des chiffrierten Arbeitsgruppenschlüssels an den Benutzer.

14. System nach Anspruch 12, wobei die Ressource aus der Gruppe ausgewählt wird, die folgendes umfasst:
einen Kommunikationsanschluss;
einen Server; und
einen Datenspeicher.

15. System nach Anspruch 12, wobei der programmierbare Schaltkreis ferner so programmiert ist, dass folgendes ermöglicht wird:
das Aufheben der Zuordnung des Arbeitsgruppenschlüssels zu jedem einen Benutzer oder der Mehrzahl von Benutzern;
das Erzeugen eines zweiten Arbeitsgruppenschlüssels, der der Interessengemeinschaft zugeordnet ist;
das Schützen der einen oder der mehreren Ressourcen, welche der Interessengemeinschaft zugeordnet sind, unter Verwendung des zweiten Arbeitsgruppenschlüssels;
das Chiffrieren des zweiten Arbeitsgruppenschlüssels unter Verwendung eines öffentlichen Schlüssels, der einem Administrator der Interessengemeinschaft zugeordnet ist, wobei der öffentliche Schlüssel gemeinsam mit einem privaten Schlüssel in einem Paar aus öffentlichem und privatem Schlüssel enthalten ist, das dem Administrator zugeordnet ist;
das Speichern des chiffrierten zweiten Arbeitsgruppenschlüssels in einem Benutzerprofil des Administrators; und
das Zuordnen des zweiten Arbeitsgruppenschlüssels zu jedem einen Benutzer oder der Mehrzahl von Benutzern, wodurch der eine Benutzer oder die Mehrzahl von Benutzern der Interessengemeinschaft hinzugefügt wird bzw. werden.

16. System nach Anspruch 12, wobei der programmierbare Schaltkreis ferne so programmiert ist, dass der Benutzer aus der Interessengemeinschaft entfernt wird.

## Revendications

1. Procédé de gestion d'une communauté d'intérêt ayant accès à une ressource, le procédé comprenant les étapes consistant à :
créer une clé de groupe de travail associée à une communauté d'intérêt ;
protéger une ou plusieurs ressources associées à la communauté d'intérêt en utilisant la clé de groupe de travail ;
chiffrer la clé de groupe de travail en utilisant une clé publique associée à un administrateur de la communauté d'intérêt, la clé publique incluant une clé privée dans une paire clé publique/clé privée associée à l'administrateur ;
stocker la clé de groupe de travail chiffrée ; et
associer la clé de groupe de travail à un utilisateur, ajoutant ainsi l'utilisateur à la communauté d'intérêt ;
**caractérisé en ce que** l'association de la clé de groupe de travail à un utilisateur comprend les étapes consistant à :
récupérer la clé de groupe de travail chiffrée ;
déchiffrer la clé de groupe de travail chiffrée avec la clé privée associée à l'administrateur en utilisant la clé privée associée à l'administrateur ; et
chiffrer la clé de groupe de travail déchiffrée en utilisant une clé publique associée à un administrateur à ajouter à la communauté d'intérêt, la clé publique incluant une clé privée dans une paire clé publique/clé privée associée à l'utilisateur.

2. Procédé selon la revendication 1, dans lequel l'association de la clé de groupe de travail à un utilisateur comprend en outre l'étape consistant à stocker la clé de groupe de travail chiffrée avec la clé publique associée à l'utilisateur dans un emplacement accessible à l'utilisateur.

3. Procédé selon la revendication 2, comprenant en outre l'étape consistant à retirer l'utilisateur de la communauté d'intérêt.

4. Procédé selon la revendication 2, dans lequel le retrait de l'utilisateur de la communauté d'intérêt comprend l'étape consistant à supprimer la clé de groupe de travail chiffrée avec la clé publique associée à l'utilisateur de l'emplacement où elle est stockée.

5. Procédé selon la revendication 2, dans lequel l'emplacement comprend un profil associé à l'utilisateur sur un serveur de clés.

6. Procédé selon la revendication 1, comprenant en outre l'étape consistant à recomposer la communauté d'intérêt, dans lequel la recomposition de la communauté d'intérêts comprend les étapes consistant à :
dissocier la clé de groupe de travail de l'utilisateur ;
créer une seconde clé de groupe de travail associée à la communauté d'intérêt ;
protéger la ou les ressources associées à la communauté d'intérêt en utilisant la seconde clé de groupe de travail ;
chiffrer la seconde clé de groupe de travail en utilisant une clé publique associée à un administrateur de la communauté d'intérêt, la clé publique incluant une clé privée dans une paire clé publique/clé privée associée à l'administrateur ;
stocker la seconde clé de groupe de travail chiffrée ; et
associer la seconde clé de groupe de travail à un utilisateur, ajoutant ainsi l'utilisateur à la communauté d'intérêt.

7. Procédé selon la revendication 1, dans lequel la ou les ressources comprennent au moins une ressource choisie dans le groupe constitué de :
un port de communication ;
un serveur ; et
un stockage de données.

8. Procédé selon la revendication 2, comprenant en outre les étapes consistant à :
recevoir une demande d'accès à une ressource au niveau d'un serveur de clés d'un utilisateur ;
récupérer la clé de groupe de travail chiffrée en utilisant une clé publique d'une paire clé publique/clé privée associée à l'utilisateur à partir d'un répertoire ;
fournir la clé de groupe de travail chiffrée à l'utilisateur.

9. Procédé de recomposition d'une communauté d'intérêt comprenant une pluralité d'utilisateurs, chaque utilisateur ayant accès à une clé de groupe de travail utilisée pour protéger une ressource, le procédé comprenant les étapes consistant à :
dissocier une clé de groupe de travail de chacun de la pluralité d'utilisateurs ayant accès à la clé de groupe de travail ;
créer une clé de groupe de travail de remplacement associée à la communauté d'intérêt, la clé de groupe de travail de remplacement protégeant la ressource protégée par la clé de groupe de travail ;
chiffrer la clé de groupe de travail de remplacement en utilisant une clé associée à un administrateur de la communauté d'intérêt ;
stocker la clé de groupe de travail de remplacement chiffrée ; et
associer la clé de groupe de travail de remplacement à chacun de la pluralité d'utilisateurs, incluant ainsi chacun de la pluralité d'utilisateurs dans la communauté d'intérêts ;
dans lequel la clé est une clé publique d'une paire clé publique/clé privée associée à l'administrateur ; et
dans lequel l'association de la clé de groupe de travail de remplacement à chacun de la pluralité d'utilisateurs comprend les étapes consistant à :
récupérer la clé de groupe de travail de remplacement chiffrée ;
déchiffrer la clé de groupe de travail de remplacement chiffrée avec la clé publique associée à l'administrateur en utilisant la clé privée associée à l'administrateur ; et
pour chacun de la pluralité d'utilisateurs, chiffrer la clé de groupe de travail déchiffrée en utilisant une clé publique associée à l'utilisateur, la clé publique incluant une clé privée dans une paire clé publique/clé privée associée à l'utilisateur.

10. Procédé selon la revendication 9, comprenant en outre les étapes consistant à :
recevoir une demande d'accès à une ressource au niveau d'un serveur de clés d'un utilisateur ;
récupérer la clé de groupe de travail de remplacement chiffrée en utilisant une clé publique d'une paire clé publique/clé privée associée à l'utilisateur à partir d'un répertoire ; et
fournir la clé de groupe de travail de remplacement chiffrée à l'utilisateur.

11. Procédé selon la revendication 9, dans lequel la ressource est choisie dans le groupe constitué de :
un port de communication ;
un serveur ; et
un stockage de données.

12. Système de gestion de l'appartenance à une communauté d'intérêt, le système comprenant :
un serveur de clés accessible à une pluralité d'utilisateurs et gérant l'accès à une pluralité de ressources, le serveur de clés comprenant :
une mémoire configurée pour stocker un répertoire comprenant une pluralité de profils utilisateurs, chaque profil utilisateur étant associé à un utilisateur ;
un circuit programmable connecté de manière communicative à la mémoire, le circuit programmable étant configuré pour exécuter des instructions de programme pour :
créer une clé de groupe de travail associée à une communauté d'intérêt ;
protéger une ou plusieurs de la pluralité de ressources associées à la communauté d'intérêt en utilisant la clé de groupe de travail ;
chiffrer la clé de groupe de travail en utilisant une clé publique associée à un administrateur de la communauté d'intérêt, la clé publique incluant une clé privée dans une paire clé publique/clé privée associée à l'administrateur ;
stocker la clé de groupe de travail chiffrée dans un profil utilisateur de l'administrateur, le profil utilisateur de l'administrateur étant inclus dans le répertoire ; et
associer la clé de groupe de travail à un ou plusieurs utilisateurs parmi la pluralité d'utilisateurs, ajoutant ainsi chacun du ou des utilisateurs à la communauté d'intérêt ;
**caractérisé en ce que** le circuit programmable est configuré pour associer la clé de groupe de travail à une ou plusieurs utilisations en exécutant les instructions de programme pour :
récupérer la clé de groupe de travail chiffrée ;
déchiffrer la clé de groupe de travail chiffrée avec la clé privée associée à l'administrateur en utilisant la clé privée associée à l'administrateur ; et
chiffrer la clé de groupe de travail déchiffrée en utilisant une clé publique associée à un utilisateur à ajouter à la communauté d'intérêt, la clé publique incluant une clé privée dans une paire clé publique/clé privée associée à l'utilisateur.

13. Système selon la revendication 12, dans lequel le circuit programmable est en outre configuré pour :
recevoir une demande d'accès à une ressource au niveau d'un serveur de clés d'un utilisateur ;
récupérer la clé de groupe de travail chiffrée en utilisant une clé publique d'une paire clé publique/clé privée associée à l'utilisateur à partir d'un répertoire ; et
fournir la clé de groupe de travail chiffrée à l'utilisateur.

14. Système selon la revendication 12, dans lequel la ressource est choisie dans le groupe constitué de :
un port de communication ;
un serveur ; et
un stockage de données.

15. Système selon la revendication 12, dans lequel le circuit programmable est en outre programmé pour :
dissocier la clé de groupe de travail de chacun du ou des utilisateurs ;
créer une seconde clé de groupe de travail associée à la communauté d'intérêt ;
protéger la ou les ressources associées à la communauté d'intérêt en utilisant la seconde clé de groupe de travail ;
chiffrer la seconde clé de groupe de travail en utilisant une clé publique associée à un administrateur de la communauté d'intérêt, la clé publique incluant une clé privée dans une paire clé publique/clé privée associée à l'administrateur ;
stocker la seconde clé de groupe de travail chiffrée dans un profil utilisateur de l'administrateur ; et
associer la seconde clé de groupe de travail à chacun du ou des utilisateurs, incluant ainsi le ou les utilisateurs dans la communauté d'intérêt.

16. Système selon la revendication 12, dans lequel le circuit programmable est en outre programmé pour retirer l'utilisateur de la communauté d'intérêt.
